# DEMANDE DE BREVET EUROPEEN

(11) **EP 4 112 579 A1**
(43) Date de publication de la demande: **04.01.2023**
(21) Numéro de dépôt: 22181506.1
(22) Date de dépôt: 28.06.2022
(51) Int. Cl.: C04B 33/04, C04B 33/132, C04B 33/24, C04B 35/626

(54) **PATE DE PORCELAINE A CUIRE, PROCEDE DE FABRICATION DE PORCELAINE ET PORCELAINE AINSI PREPAREE**

(30) Priorité: 29.06.2021 FR 2106961
(71) Demandeur: Alegina, 85170 Dompierre-sur-Yon (FR)
(72) Inventeur: TESSON, Benoît, 85100 LES SABLES D'OLONNE (FR); GABORIAU, Philippe, 85170 DOMPIERRE SUR YON (FR); GIRARDEAU, Dominique, 85000 LA ROCHE SUR YON (FR)
(74) Mandataire: Ipsilon

(57) **Abrégé**

Pâte de porcelaine à cuire composée d'eau et d'une fraction minérale comprenant de 20 à 40 % massique de kaolin, de 15 à 30 % massique de feldspath, de 30 à 50 % massique de phosphate de calcium, et éventuellement de la silice en concentration inférieure ou égale à 10 % massique, le calcium du phosphate de calcium étant issu de coquilles d'huîtres. Cette pâte peut avantageusement être cuite à une température comprise entre 1180 °C et 1260 °C sous atmosphère oxydante. Elle peut aussi renfermer entre 0,1 % et 10 % massique de poudre de coquille d'huîtres crue micronisée de granulométrie inférieure ou égale à 150 µm. La porcelaine ainsi préparée avec ou sans ajout de poudre de coquilles d'huîtres micronisée crue présente des qualités de blancheur et de résistance supérieures à celles de la porcelaine de Limoges.

## Description

### DOMAINE DE L'INVENTION

La présente invention concerne une composition de pâte de porcelaine à cuire, le procédé de fabrication de la porcelaine à partir de ladite pâte, et la porcelaine ainsi préparée.

### ETAT DE LA TECHNIQUE

Au fil du temps différents types de porcelaine ont été fabriquées. La porcelaine inventée au Vile siècle en Chine est une céramique fine et translucide, composée de kaolin, feldspath et quartz et transformée à très haute température. En effet, une cuisson à 1400°C est réalisée lors du processus de fabrication, produisant cette porcelaine dure.

En Europe, la porcelaine tendre fait son apparition au XIIIe siècle, réalisée à partir de mélanges d'argile et de verre pilé. Cette porcelaine est beaucoup plus fragile que la porcelaine chinoise. La technique de la porcelaine dure va se déployer au début du XVIIIe siècle grâce à la découverte de l'ingrédient manquant : le kaolin.

A l'heure actuelle, on connait d'une part la porcelaine dure, dont la représentante est la porcelaine de Limoges composée d'environ 50 % de kaolin, de 25 % de feldspath et de 25 % de quartz, cuite à une température proche de 1400 °C sous atmosphère réductrice. Cette porcelaine est caractérisée par sa blancheur, sa résistance et sa translucidité.

D'autre part la porcelaine à la cendre d'os est produite à partir d'une pâte renfermant environ 25 % de kaolin, 25 % de feldspath et de 50% de cendre d'os. Cette cendre d'os provient d'os de bovins, broyés, dégélatinés puis calcinés et finement rebroyés. Cette pâte est ensuite cuite sous atmosphère oxydante à une température d'environ 1230 °C, bien inférieure à la température de cuisson de la porcelaine dure. De plus cette porcelaine dénommée « Bone china » présente un degré de blancheur et une résistance aux chocs importante.

Dans sa recherche pour remplacer les cendres d'os de la porcelaine « Bone china », composées majoritairement de phosphate de calcium, le(s) inventeur(s) se sont tournés vers des ressources naturelles de calcium, telles que les coquillages, formés de carbonate de calcium, à partir desquels ils pourraient produire le phosphate de calcium.

Parmi les déchets de coquillages, les coquilles d'huîtres constituent le déchet majoritaire. En effet plusieurs dizaines de milliers de tonnes d'huîtres sont vendues chaque année en France et plusieurs dizaines de milliers sont également éliminées pendant la production des huîtres (mortalité, ...). L'utilisation de cette matière permet, outre de disposer d'un matériau abondant, de « recycler » et de valoriser ces déchets.

Dans ce contexte, les documents brevets CN107963884A et CN103214234A contiennent des matières premières provenant d'huitres. Toutefois, les procédés et produits décrits dans ces documents sont perfectibles.

### BUTS DE l'INVENTION

Un premier but de l'invention est donc d'utiliser la ressource naturelle des coquilles d'huîtres dans la composition des pâtes de porcelaine.

Un autre but de l'invention est d'utiliser la ressource naturelle des coquilles d'huîtres pour produire du phosphate de calcium apte à entrer dans la composition des pâtes de porcelaine.

Un autre but de l'invention est de pouvoir incorporer la matière des coquilles d'huîtres crues directement à la pâte de porcelaine.

### DESCRIPTION DE L'INVENTION

A cet effet la présente invention concerne une pâte de porcelaine à cuire composée d'eau et d'une fraction minérale comprenant du kaolin, du feldspath et du phosphate de calcium caractérisée en ce que la fraction minérale comprend de 20 à 40 % massique de kaolin, de 15 à 30 % massique de feldspath, de 30 à 50 % massique de phosphate de calcium, et éventuellement de la silice en concentration inférieure ou égale à 10 % massique, et en ce que le calcium du phosphate de calcium est issu de coquilles d'huîtres.

Le phosphate de calcium préparé à partir de coquilles d'huîtres remplace ainsi avantageusement la poudre d'os utilisée dans les pâtes de porcelaine de type « Bone china », sans dégradation des propriétés de la porcelaine finale, comme cela est montré plus loin dans les exemples. Le pourcentage massique de 30 % à 50 %, de préférence compris entre 35 % et 45 % de phosphate de calcium issu de coquilles d'huîtres permet une réutilisation importante de ces déchets ostréicoles.

Avantageusement, la fraction minérale de la pâte de porcelaine comprend de 25 à 35 % massique de kaolin, de 17 à 25 % massique de feldspath, de 2 à 8 % de silice et de 30 à 50 % massique de phosphate de calcium issu de coquilles d'huîtres, de préférence compris entre 35 % et 45 % de phosphate de calcium issu de coquilles d'huîtres.

La silice est de préférence sous forme de quartz.

De manière avantageuse, la fraction minérale de la pâte de porcelaine comprend de 25 à 30 % massique de kaolin, telle que 26% massique plus ou moins 0,5% massique, 27% massique plus ou moins 0,5% massique, 28% massique plus ou moins 0,5% massique ou 29% massique plus ou moins 0,5% massique. Il a pu être constaté dans le contexte de la présente invention que trop de Kaolin diminue la blancheur de la porcelaine (jaunissement du produit), et que pas assez de kaolin, induit un manque de plasticité de la pâte, qui doit alors être corrigée avec l'ajout de plastifiant(s), tels que des méthyl celluloses.

Selon un mode de réalisation de l'invention, le phosphate de calcium présente un rapport molaire Ca/P compris entre 1,5 et 1,75, de préférence compris entre 1,55 et 1,70, de préférence encore compris entre 1,65 et 1,70.

De manière avantageuse ce phosphate de calcium se présente sous forme essentiellement d'apatite avec un rapport molaire Ca/P de 1,67.

Selon un mode particulier de réalisation de l'invention, la fraction minérale de la pâte comprend également de la coquille d'huître crue micronisée, telle que 0,1 à 10 % massique, de préférence de 1 % à 8 % massique, de préférence encore de 2 % à 6 % massique, de coquille d'huître crue micronisée.

La présence de cette coquille d'huître crue micronisée augmente encore la proportion de minéraux d'origine ostréicole, et ainsi la part de matière renouvelable, dans la pâte de porcelaine.

La présente invention concerne également le procédé de fabrication de porcelaine à partir d'une pâte de porcelaine, telle que décrite ci-dessus, comprenant le mélange et le broyage du kaolin, du feldspath, du phosphate de calcium, et éventuellement de la silice, en présence d'eau, suivie d'un façonnage de ladite pâte par coulage, pressage ou calibrage, puis d'une cuisson de la pâte à une température supérieure à 1180 °C, le phosphate de calcium étant préparé à partir de poudre de coquilles d'huîtres.

Ledit phosphate de calcium est avantageusement préparé à partir de poudre de coquilles d'huîtres micronisée, qui peut être crue ou calcinée. Selon une variante de l'invention, cette poudre de coquilles d'huîtres micronisée est calcinée à une température comprise entre 900 et 1100 °C.

Plus particulièrement le phosphate de calcium peut être préparé à partir de poudre de coquilles d'huîtres micronisée et calcinée, mise en suspension dans l'eau, à laquelle est ajouté, sous agitation, de l'acide phosphorique ou un sel d'acide phosphorique jusqu'à obtention d'un rapport molaire Ca/P compris entre 1,50 et 1,75, de préférence compris entre 1,55 et 1,70, de préférence encore compris entre 1,65 et 1,70, le phosphate de calcium ainsi obtenu étant ensuite filtré, séché, broyé et calciné à une température comprise entre 1000 et 1250°C.

De manière avantageuse, la poudre de coquille d'huîtres micronisée est préparée à partir de coquilles d'huîtres lavées et sablées, afin de les débarrasser des résidus éventuels de chair et d'algues, de dégrader la couche de surface renfermant des pigments, et d'obtenir ainsi des coquilles « blanchies», puis, après séchage, broyées et micronisées jusqu'à atteindre une granulométrie de la poudre de coquille d'huîtres micronisée inférieure ou égale à 150 µm, de préférence inférieure ou égale à 100 µm, de préférence encore inférieure ou égale à 50 µm.

Selon un mode de réalisation de l'invention, la poudre de coquille d'huîtres micronisée crue, préparée à partir de coquilles d'huîtres lavées, sablées, séchées, broyées et micronisées jusqu'à atteindre une granulométrie inférieure ou égale à 150 µm, de préférence inférieure ou égale à 100 µm, de préférence encore inférieure ou égale à 50 µm, est ensuite ajoutée, dans une proportion massique comprise entre 0,1 % et 10 %, au mélange du kaolin, du feldspath, du phosphate de calcium et de la silice éventuelle en présence d'eau.

Cette poudre de coquille d'huîtres micronisée crue est de préférence ajoutée, dans une proportion massique comprise entre 0,1 % et 10 %, à un mélange comprenant 20 à 40 % massique de kaolin, 15 à 30 % massique de feldspath, 30 à 50 % massique de phosphate de calcium et éventuellement de la silice en concentration inférieure ou égale à 10 % massique.

La cuisson de la pâte de porcelaine est ensuite effectuée à une température comprise entre 1180 °C et 1260 °C sous atmosphère oxydante. C'est-à-dire que cette cuisson est effectuée à une température inférieure à la température de cuisson de la porcelaine de type porcelaine dure, telle que la porcelaine de Limoges, et à l'air, sans nécessité de réduire l'environnement en oxygène.

Les proportions en minéraux issus de coquilles d'huîtres dans la porcelaine ainsi obtenue sont importantes :
- si la porcelaine est préparée suivant le procédé décrit ci-dessus à partir d'une pâte renfermant de 30 à 50 % de phosphate de calcium, elle comprend entre 19 et 31 % de minéraux issus de coquilles d'huîtres ;
- si la porcelaine est préparée suivant le procédé décrit ci-dessus à partir d'une pâte renfermant de 30 à 50 % de phosphate de calcium et 5 % de poudre de coquilles d'huîtres micronisée crue, elle comprend entre 24 et 36 % de minéraux issus de coquilles d'huîtres.

En conséquence, la porcelaine selon la présente invention peut être produite à partir d'un déchet de plusieurs dizaines de milliers de tonnes annuelles en France de coquilles d'huîtres, recyclées et valorisées.

La présente invention concerne également la porcelaine préparée suivant le procédé décrit ci-avant, porcelaine qui s'avère présenter des propriétés intéressantes. Plus particulièrement :
- ladite porcelaine présente un module de rupture, mesuré à la presse à flexion trois points, sur des barreaux de porcelaine cylindriques, supérieur à 95 MPa et mesuré à la presse à flexion trois points sur des barreaux de porcelaine parallélépipèdiques supérieur à 75 MPa ;
- ladite porcelaine présente une blancheur L*, mesurée par spectro-colorimétrie suivant le référentiel CIELAB L* a* b*, supérieure ou égale à 96,9.

Ladite porcelaine préparée à partir d'une pâte renfermant au moins 5 % massique de poudre de coquilles d'huîtres micronisée crue, présente une blancheur supérieure L*, mesurée par spectro-colorimétrie suivant le référentiel CIELAB L* a* b*, supérieure à une porcelaine préparée sans ajout de poudre de coquilles d'huîtres micronisée crue.

Ladite porcelaine préparée à partir d'une pâte comprenant de 25 à 35 % massique de kaolin, de 17 à 25 % massique de feldspath, de 2 à 8 % massique de silice, et de 30 à 50 % massique de phosphate de calcium issu de coquilles d'huîtres, cuite à une température comprise entre 1180 °C et 1260°C sous atmosphère oxydante, présente une résistance mécanique à la flexion supérieure à celle d'une porcelaine préparée avec du phosphate de calcium issu d'os calciné.

### Brève description des dessins

L'invention sera bien comprise à la lecture de la description suivante d'exemples de réalisation, en référence au dessin annexé dans lequel :

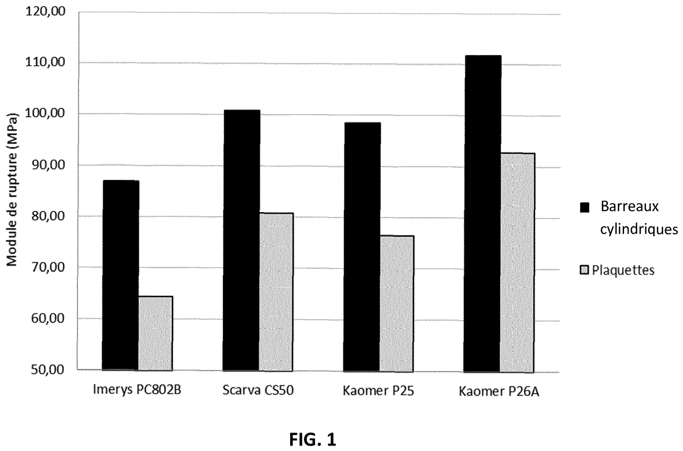

[Fig. 1] représente la résistance mécanique à la flexion 3 points réalisée sur différents échantillons de porcelaine sous forme de barreaux cylindriques ou parallélépipédiques : porcelaine selon l'invention P25 et P26A, porcelaine de Limoges (Imerys PC802B) et porcelaine à la poudre d'os « bone china » (Scarva CS50).

### EXEMPLES

### Préparation du blanc de coquille

La poudre de coquille d'huître est produite à partir de coquilles collectées chez les ostréiculteurs ainsi que dans les déchetteries. Cependant ces coquilles sont contaminées par de la matière organique et minérale exogène et doivent être traitées préalablement à leur utilisation dans le procédé selon l'invention.

Le procédé décrit ci-dessous est destiné à reproduire en accéléré le blanchiment naturel des coquilles d'huître observé dans le milieu naturel résultant de l'action combiné des éléments (sables, vagues...). Pour cela les coquilles collectées sont tout d'abord passées dans un tambour laveur afin de les débarrasser des particules fines faiblement liées ; de plus cette première étape permet d'ouvrir les coquilles encore intactes. Cette étape peut ensuite être répétée plusieurs fois pendant 30 min à 2 h, en ajoutant du sable à l'eau de lavage. Le sable est ensuite recyclé par décantation.

L'entrechoquement des fragments de coquilles en présence de sable dans le tambour rotatif permet d'enlever une partie de la couche externe des coquilles qui est recouverte d'algues et éventuellement de chair résiduelle. Cette étape permet également d'éliminer la couche de surface qui contient la majorité des pigments associés à la coquille et qui lui confère une teinte foncée. Les coquilles sont ensuite soumises à un rinçage haute pression pour les débarrasser des débris et du sable résiduels.

Les coquilles sont ensuite séchées, broyées à une granulométrie inférieure à 8 mm puis micronisées jusqu'à atteindre une granulométrie comprise inférieure à 150 µm, préférablement inférieure à 100 µm, voire si nécessaire broyées jusqu'à une granulométrie inférieure à 30 µm.

Le procédé ci-dessus permet ainsi d'obtenir une poudre blanche très fine de coquille d'huître, débarrassée des impuretés, à partir de coquilles issues de la filière ostréicole, dénommée ci-après poudre micronisée crue.

### Synthèse du phosphate de calcium

La poudre de coquille d'huître micronisée crue est calcinée à une température comprise entre 900 et 1100 °C, de préférence entre 1000 °C et 1100 °C pendant environ 2 heures. Cette poudre micronisée calcinée est ensuite broyée puis re-suspendue dans l'eau à une concentration de 250 g/L et homogénéisée par agitation pendant 1 h avant de débuter l'ajout progressif d'acide phosphorique.

L'acide phosphorique à 75 % dilué à 1 volume d'acide phosphorique pour 5 volumes d'eau est ajouté très lentement à la suspension de poudre de coquille d'huître micronisée calcinée selon un débit inférieur à 100 ml/min (de préférence inférieur à 50 ml/min, de préférence encore inférieur à 15 ml/min) à l'aide d'une pompe péristaltique. Le mélange est agité en permanence à 300 tr/min à l'aide d'un mélangeur. Le rapport molaire Ca/P final est compris entre 1,5 et 1,7, de préférence proche de 1,67 et la température de la réaction est maintenue à une valeur comprise entre 15 et 80 °C, de préférence comprise entre 40 et 60 °C, afin de favoriser la formation d'apatite qui est la forme chimique recherchée au détriment du phosphate tricalcique. En effet l'apatite est la phase la plus stable en solution.

Après la fin de l'ajout de la solution d'acide phosphorique, l'agitation du mélange est maintenue pendant plusieurs heures. Le mélange est ensuite maturé sans agitation pendant 1 à 3 jours.

Le mélange est ensuite filtré sous vide, séché en étuve à 80°C, broyé puis calciné à une température comprise entre 1000 et 1250°C, de préférence comprise entre 1100 et 1200 °C pendant 2 heures, et de nouveau broyé.

Le produit final calciné est un mélange de phosphate tricalcique et d'apatite, de préférence renfermant majoritairement de l'apatite. Avantageusement le produit final calciné renferme essentiellement de l'apatite.

### Préparation de la pâte de porcelaine à cuire

Le phosphate de calcium ainsi formé à partir de poudre de coquille d'huître calcinée est ensuite mélangé dans des proportions massiques de 30 % à 50% avec du kaolin (20 - 40%), du feldspath (15 - 30%), éventuellement de la silice sous forme de quartz (0,1 - 10%) et éventuellement de la poudre de coquille micronisée crue (0 - 10%).

La pâte de porcelaine dénommée Kaomer contenant 40% de phosphate de calcium et 5% de poudre de coquille crue (Kaomer P25) contient in fine 30% massique de coquille d'huître contre 25% massique de coquille d'huître pour le Kaomer P26A.

Le mélange est broyé pendant 2 à 4 heures dans un broyeur à boulets en présence d'eau selon une densité d'environ 1,6 à 1,8. Un agent défloculant de type polyacrylate (0,15 - 0,3% massique) est ajouté pendant le broyage afin de réduire la viscosité de la pâte appelée alors barbotine. La barbotine est ensuite tamisée sur un tamis de 150 µm.

La pâte de porcelaine peut ensuite être mise en forme par coulage dans un moule (barbotine) ou par pressage ou calibrage (pâte plus plastique). La pâte de porcelaine mise en forme est ensuite cuite à une température comprise entre 1200 et 1260 °C. La porcelaine cuite peut ensuite être émaillée, la formulation de l'émail pouvant aussi inclure jusqu'à 20 % de poudre de coquille d'huître micronisée crue. La partie émaillage ne fait pas l'objet de la présente invention.

Le tableau 1 ci-dessous présente deux exemples de composition de pâte de porcelaine selon la présente réalisation de l'invention.

**TABLEAU 1**

| % massique | Kaolin | Feldspath | Phosphate de calcium | Silice | Huître crue | T°C de cuisson |
|---|---|---|---|---|---|---|
| Kaomer P25 | 30 | 20 | 40 | 5 | 5 | 1250 |
| Kaomer P26A | 35 | 20 | 40 | 5 | - | 1230 |

Un avantage important concerne la température de cuisson de la pâte de porcelaine selon la présente invention qui est inférieure de 130 °C à la température classique de cuisson de la porcelaine de Limoges (notée plus loin Imerys PC-802 B dans le tableau 2). De plus cette cuisson est avantageusement réalisée en atmosphère oxydante, alors que la porcelaine de Limoges exige d'éliminer l'oxygène du four lors de la cuisson (noté atmosphère réductrice dans ce tableau 2).

### Qualités de la porcelaine selon l'invention

Différentes analyses ont été effectuées sur les deux exemples de porcelaine réalisées selon le procédé de la présente invention afin de caractériser leurs propriétés. Ces propriétés ont été comparées à celles de la porcelaine de Limoges (référence Imerys PC-802 B) et à la porcelaine Bona China (référence Scarva CS50). Il est précisé ici que les analyses présentées ci-après ont été réalisées sur les porcelaines non émaillées.

### Colorimétrie

Les mesures de colorimétrie ont été réalisées avec le référentiel CIE LAB sur deux éprouvettes de chaque composition de porcelaine cuite et mesurée sur un spectrocolorimètre PCE. Les résultats sont reportés dans le tableau 2.

**TABLEAU 2**

| | **Cuisson** | | **%** | | **Colorimétrie** | | |
|---|---|---|---|---|---|---|---|
| | **T°C** | **Atmosphère** | **Absorption** | **Densité** | **L*** | **a*** | **b*** |
| **Imerys PC-802B** | 1380 | Réductrice | 0,062 | 2,38 | 94,1 | -0,655 | 0,82 |
| **Scarva CS50** | 1230 | Oxydante | 0,044 | 2,51 | 96,7 | 0,88 | 1,86 |
| **Kaomer P25** | 1250 | Oxydante | 0,035 | 2,43 | 97,2 | 1,09 | 1,64 |
| **Kaomer P26A** | 1230 | Oxydante | 0,045 | 2,45 | 96,9 | 1,01 | 1,41 |

Les mélanges kaomer P25 et P26A, ainsi que le bone china ont une luminosité significativement supérieure à la Porcelaine de Limoges : P25 : +3,12 P26A : +2,85. Il semblerait que l'ajout de poudre de coquille d'huître crue à la pâte de porcelaine améliore la blancheur (luminosité L).

La porcelaine P26A (sans poudre de coquille crue) possède une luminosité similaire à une porcelaine "Bone china". La porcelaine P25 (avec poudre de coquille crue) présente une luminosité supérieure de plus de 0,5 point.

### Absorption d'eau et densité

Les méthodes utilisées sont respectivement :
- l'absorption par pesée différentielle (après ébullition d'eau pendant 2h)
- la densité par pesée hydrostatique (poussée d'Archimède).

Les résultats sont reportés dans le tableau 2.

L'absorption d'eau a été mesurée afin de s'assurer que les éprouvettes ont été frittées correctement, ce qui est le cas (toutes les valeurs sont inférieures à 0,1%).

La densité de la porcelaine bone-china est significativement supérieure à celle de la porcelaine de Limoges. Les deux porcelaines selon l'invention sont situées à des niveaux intermédiaires. Cela peut s'expliquer par une absorption d'eau légèrement supérieure de la porcelaine, mais aussi par la formation de phases plus denses dans la porcelaine bone china et aussi dans la porcelaine P26A (sans poudre de coquille crue). On note cependant que l'ajout de poudre de coquille crue fait baisser la densité de la porcelaine cuite.

### Résistance mécanique

La résistance mécanique a été mesurée à la presse à flexion 3 points afin de quantifier l'effort maximal à la rupture et calculer le module de rupture, d'une part sur des barreaux cylindriques et d'autre part sur des barreaux parallélépipédiques (plaquettes). Les valeurs moyennes des modules de rupture sont présentées dans le tableau 3 ci-après et visualisées sur la figure 1.

**TABLEAU 3**

| **Module de rupture (MPa)** | **Barreaux cylindriques** | | **Barreaux parallélépipédiques** | | | |
|---|---|---|---|---|---|---|
| **Porcelaine** | **Moyenne** | **Ecart type** | **Moyenne** | **Ecart type** | **Ecart/Limoges** | **Ecart/bone china** |
| **Imerys PC802B (Limoges)** | 86,83 | 5,43 | 64,36 | 3,02 | | -15,86 % |
| **Scarva CS50 ("Bone China")** | 100,76 | 11,63 | 80,75 | 4,88 | 25,46 % | |
| **Kaomer P25** | 98,37 | 5,72 | 76,50 | 4,13 | 18,85 % | -5,27 % |
| **Kaomer P26A** | 111,73 | 11,94 | 92,73 | 8,26 | 44,07 % | 14,83 % |

Les porcelaines selon l'invention P25 et P26A, ainsi que la porcelaine bone china présentent une résistance à la rupture significativement supérieure à la porcelaine de Limoges : P25 : +19 % ; P26A : +44%.

La porcelaine P26A (sans poudre de coquille crue) a une résistance à la flexion supérieure de près de 15 % à la porcelaine "Bone china". La porcelaine P25 (avec poudre de coquille crue) présente une résistance similaire à cette dernière.

### Translucidité

Méthode mise en œuvre a utilisé la spectro-colorimétrie sur fond blanc et fond noir d'échantillons compris entre 1 et 2 mm d'épaisseur. La mesure a été faite suivant le référentiel CIELAB et le calcul de l'écart de couleur, appelé delta E, entre fond blanc et fond noir pondéré de l'épaisseur au carré. Les résultats sont présentés dans le tableau 4.

**TABLEAU 4**

| (* = une seule mesure) | | |
|---|---|---|
| **Porcelaine** | **Moyenne** | **Ecart type** |
| **Imerys PC802B** | 6,44 | 1,65 |
| **Scarva CS50** | 2,55 | 0,63 |
| **Kaomer P25** | 2,84 | * |
| **Kaomer P26A** | 2,79 | 0,18 |

Selon la méthode mise au point, les porcelaines P26A et P25 ne présentent pas une meilleure translucidité que la porcelaine de Limoges, mais on note de meilleurs résultats que pour la porcelaine bone-china.

### Influence de différents paramètres sur le comportement de la porcelaine

### Influence du rapport Ca/P lors de la synthèse

Lorsque le rapport molaire Ca/P du phosphate de calcium préparé à partir de coquilles d'huîtres est voisin de 1,5, la température finale de cuisson de la porcelaine diminue et la déformation augmente. Le rapport molaire Ca/P optimal est 1,67.

### Influence de l'addition de poudre de coquille crue

L'ajout de 5 % de poudre de coquille crue dans la pâte de porcelaine selon la présente invention permet d'une part d'augmenter la proportion de coquille mise en œuvre dans la fraction minérale de la pâte mais également de limiter la déformation lors de la cuisson. En effet la présence de poudre de coquille d'huître conduit à une légère augmentation de la température de cuisson, notée en particulier au-delà de 5% de poudre de coquille crue.

### Les principaux paramètres mesurés sont regroupés dans le tableau 2.

Le premier avantage de la porcelaine « bone china » et des porcelaines selon la présente invention est lié à la température de cuisson 130°C inférieure à la porcelaine de Limoges. De plus afin de conserver sa blancheur, la porcelaine de Limoges doit être cuite en condition réductrice. La porcelaine bone china ainsi que celles selon l'invention peuvent être cuites en condition oxydante tout en conservant leur blancheur, il n'est donc pas nécessaire de contrôler l'atmosphère lors de la cuisson. Ces avantages présentent un grand intérêt sur le plan industriel.

Malgré une cuisson sous atmosphère oxydante la porcelaine bone china ainsi que les porcelaines selon l'invention sont plus blanches que la porcelaine de Limoges. La porcelaine selon l'invention incorporant de la poudre de coquille d'huître crue est plus blanche que la porcelaine Bone china. L'ajout de poudre de coquille crue améliore donc les qualités de blancheur de la porcelaine.

En conclusion, les porcelaines selon l'invention P25 et P26A offrent de bonnes performances, que ce soit en résistance mécanique, couleur, tout en maintenant une translucidité supérieure à la porcelaine bone-china. Même si la translucidité est inférieure, à épaisseur comparable, à la porcelaine de Limoges, une meilleure résistance mécanique permet d'obtenir des pièces plus fines, et donc finalement une translucidité perçue comparable.

## Revendications

1. Pâte de porcelaine à cuire composée d'eau et d'une fraction minérale comprenant du kaolin, du feldspath et du phosphate de calcium **caractérisée en ce que** la fraction minérale comprend de 20 à 40 % massique de kaolin, de 15 à 30 % massique de feldspath, de 30 à 50 % massique de phosphate de calcium, et éventuellement de la silice en concentration inférieure ou égale à 10 % massique, et **en ce que** le calcium du phosphate de calcium est issu de coquilles d'huîtres.

2. Pâte de porcelaine à cuire selon la revendication 1, **caractérisée en ce que** la fraction minérale comprend de 25 à 35 % massique de kaolin, de 17 à 25 % massique de feldspath, de 2 à 8 % de silice, et de 30 à 50 % massique de phosphate de calcium issu de coquilles d'huîtres.

3. Pâte de porcelaine à cuire selon l'une des revendications 1 ou 2, **caractérisée en ce que** le phosphate de calcium présente un rapport molaire Ca/P compris entre 1,5 et 1,75, de préférence compris entre 1,55 et 1,70, de préférence encore compris entre 1,65 et 1,70.

4. Pâte de porcelaine à cuire selon l'une quelconque des revendications précédentes, **caractérisée en ce que** la fraction minérale de la pâte comprend également de la coquille d'huître crue micronisée, par exemple 0,1 à 10 % massique, de préférence de 1 % à 8 % massique, de préférence encore de 2 % à 6 % massique, de coquille d'huître crue micronisée.

5. Procédé de fabrication de porcelaine à partir d'une pâte de porcelaine conforme à l'une quelconque des revendications précédentes comprenant le mélange et le broyage du kaolin, du feldspath, du phosphate de calcium, et éventuellement de la silice, en présence d'eau, suivie d'un façonnage de ladite pâte par coulage, pressage ou calibrage, puis d'une cuisson de la pâte à une température supérieure à 1180 °C, le phosphate de calcium étant préparé à partir de poudre de coquilles d'huîtres.

6. Procédé selon la revendication 5, **caractérisé en ce que** le phosphate de calcium est préparé à partir de poudre de coquilles d'huîtres micronisée.

7. Procédé selon l'une des revendications 5 ou 6, **caractérisé en ce que** le phosphate de calcium est préparé à partir de poudre de coquilles d'huîtres micronisée et calcinée à une température comprise entre 900 et 1100 °C.

8. Procédé selon la revendication 7, **caractérisé en ce que** le phosphate de calcium est préparé à partir de poudre de coquilles d'huîtres micronisée et calcinée, mise en suspension dans l'eau, à laquelle est ajouté, sous agitation, de l'acide phosphorique ou un sel d'acide phosphorique jusqu'à obtention d'un rapport molaire Ca/P compris entre 1,50 et 1,75, de préférence compris entre 1,55 et 1,70, de préférence encore compris entre 1,65 et 1,70, le phosphate de calcium ainsi obtenu étant ensuite filtré, séché, broyé et calciné à une température comprise entre 1000 et 1250°C.

9. Procédé de fabrication de porcelaine selon l'une quelconque des revendications 5 à 8, **caractérisé en ce que** la poudre de coquille d'huîtres micronisée est préparée à partir de coquilles d'huîtres lavées et sablées, afin de les débarrasser des résidus éventuels de chair et d'algues, et de dégrader la couche de surface renfermant des pigments, et d'obtenir ainsi des coquilles «blanchies», puis, après séchage, broyées et micronisées jusqu'à atteindre une granulométrie de la poudre de coquille d'huîtres micronisée inférieure ou égale à 150 µm, de préférence inférieure ou égale à 100 µm, de préférence encore inférieure ou égale à 50 µm.

10. Procédé de fabrication de porcelaine selon la revendication 9 **caractérisé en ce que** la poudre de coquille d'huîtres micronisée crue, préparée à partir de coquilles d'huîtres lavées, sablées, séchées, broyées et micronisées jusqu'à atteindre une granulométrie inférieure ou égale à 150 µm, de préférence inférieure ou égale à 100 µm, de préférence encore inférieure ou égale à 50 µm, est ensuite ajoutée, dans une proportion massique comprise entre 0,1 % et 10 %, au mélange du kaolin, du feldspath, du phosphate de calcium et de la silice éventuelle en présence d'eau.

11. Procédé de fabrication de porcelaine selon la revendication 10 **caractérisé en ce que** la poudre de coquille d'huîtres micronisée crue est ajoutée, dans une proportion massique comprise entre 0,1 % et 10 %, à un mélange comprenant 20 à 40 % massique de kaolin, 15 à 30 % massique de feldspath, 30 à 50 % massique de phosphate de calcium et éventuellement de la silice en concentration inférieure ou égale à 10 % massique.

12. Procédé de fabrication de porcelaine selon l'une quelconque des revendications 5 à 11, **caractérisée en ce que** la cuisson de la pâte de porcelaine est effectuée à une température comprise entre 1180 °C et 1260 °C sous atmosphère oxydante.

13. Porcelaine préparée suivant le procédé selon l'une quelconque des revendications 5 à 12, à partir d'une pâte renfermant de 30 à 50 % de phosphate de calcium, **caractérisée en ce qu'**elle comprend entre 19 et 31 % de minéraux issus de coquilles d'huîtres.

14. Porcelaine préparée suivant le procédé selon l'une quelconque des revendications 11 à 12 à partir d'une pâte renfermant de 30 à 50 % de phosphate de calcium et 5 % de poudre de coquilles d'huîtres micronisée crue, **caractérisée en ce qu'**elle comprend entre 24 et 36 % de minéraux issus de coquilles d'huîtres.

15. Porcelaine selon l'une des revendications 13 ou 14 **caractérisée en ce qu'**elle présente un module de rupture, mesuré à la presse à flexion trois points, sur des barreaux de porcelaine cylindriques, supérieur à 95 MPa et mesuré à la presse à flexion trois points sur des barreaux de porcelaine parallélépipèdiques supérieur à 75 MPa.

16. Porcelaine selon l'une des revendications 13 ou 14 **caractérisée en ce qu'**elle présente une blancheur L*, mesurée par spectro-colorimétrie suivant le référentiel CIELAB L* a* b*, supérieure ou égale à 96,9.
